Europäisches Patentamt

European Patent Office

Office européen des brevets

(19)

(11) Numéro de publication: **0 130 869**
**A1**

(12) # DEMANDE DE BREVET EUROPEEN

(21) Numéro de dépôt: **84401167.6**

(22) Date de dépôt: **06.06.84**

(51) Int. Cl.⁴: **F 41 G 7/22**, G 02 B 27/64

(30) Priorité: **14.06.83 FR 8309828**

(43) Date de publication de la demande: **09.01.85**
**Bulletin 85/2**

(84) Etats contractants désignés: **DE GB IT SE**

(71) Demandeur: **THOMSON-CSF, 173, Boulevard Haussmann, F-75379 Paris Cedex 08 (FR)**

(72) Inventeur: **Pepin, Christian, THOMSON-CSF SCPI 173, bld Haussmann, F-75379 Paris Cedex 08 (FR)**
Inventeur: **Emmanuelli, Yves-Antoine, THOMSON-CSF SCPI 173, bld Haussmann, F-75379 Paris Cedex 08 (FR)**

(74) Mandataire: **Trocellier, Roger et al, THOMSON-CSF SCPI 173, Bld Haussmann, F-75379 Paris Cedex 08 (FR)**

(54) **Dispositif à imagerie vidéo, notamment pour autodirecteur.**

(57) Dispositif permettant de monter le détecteur fixe, découplé de l'optique réceptrice orientable en utilisant une optique de déport d'image simplifiée.

L'optique de déport d'image comprend, selon une réalisation, un élément (41) plan-concave solidaire du détecteur (2) et suivi d'un élément (42) plan-convexe solidaire de l'optique réceptrice (1), ces deux éléments jouant le rôle d'un prisme réfracteur (P1, P2) donnant une déviation égale au dépointage ($\theta$) de l'axe optique (Zo) par rapport à une référence (Z). L'orientation de l'axe optique s'effectue par rotation libre entre les deux dioptres sphériques des éléments séparés par une mince couche d'air.

L'invention s'applique notamment aux systèmes gyrostabilisés destinés à réaliser des autodirecteurs de missile, pour imagerie infrarouge ou télévision.

1

## DISPOSITIF A IMAGERIE VIDEO,
## NOTAMMENT POUR AUTODIRECTEUR

La présente invention concerne un dispositif à imagerie vidéo, notamment pour autodirecteur télévision. Cette application plus particulièrement envisagée n'est pas à considérer comme limitative le dispositif pouvant être incorporé par exemple dans un dispositif exploitant des points contrastés, écartomètre, etc...

La solution généralement utilisée pour réaliser un autodirecteur à imagerie vidéo consiste à placer le détecteur d'image et son optique sur un même support orientable selon deux axes, un axe site et un axe gisement. Le support ainsi équipé est stabilisé soit directement par une toupie de gyroscope placée sur ce même support formé par un cardan, soit indirectement par liaison mécanique ou électrique avec une plateforme stabilisée. Dans ces conditions, l'axe optique constituant l'axe de visée du dispositif est stabilisé quelle que soit l'orientation relative de l'axe longitudinal du missile qui supporte l'ensemble. Ce montage nécessite des liaisons par connexion électrique entre la partie mobile du support constitué par un cardan et portant le détecteur et la partie constituée par le missile, ce dernier comportant les circuit d'alimentation ainsi que les circuits de traitement des signaux détectés. Il en résulte des couples parasites par les liaisons électriques qui occasionnent la précession et des dérives du montage gyroscopique. La mise en place d'un dispositif de refroidissement, généralement nécessaire dans le cas d'un détecteur infrarouge, n'est pas facilitée par ce type de montage et peut également être une source de couples parasites.

Il est connu par la publication française de brevet FR-A-2 492 516 de remédier à ces défauts en montant le détecteur sur la structure fixe liée au missile. Le dispositif détecteur n'étant plus porté par la structure stabilisée et mobile en site et en gisement, il en résulte une grande simplification de la structure stabilisée, et la suppression des liaisons électriques et autres entre la partie fixe et la partie mobile entraîne celle des couples parasites correspondants et permet d'améliorer notablement la qualité de la stabilisation de l'axe de visée.

Suivant cette solution le dispositif à imagerie vidéo comporte, un moyen support d'un ensemble groupant, une optique réceptrice pour focaliser le rayonnement sur un détecteur d'image, et des moyens de stabilisation de la direction de l'axe de l'optique réceptrice utilisant un montage à au moins deux degrés de liberté autorisant la rotation spatiale de l'axe optique relativement à un axe de référence lié au moyen support. Le détecteur d'image est fixé directement sur le moyen support grâce à des moyens de déport d'image qui maintiennent la formation de l'image sur le détecteur en présence d'une rotation relative des axes.

Les moyens de déport d'image sont constitués de miroirs ou de prismes, ou de fibres optiques. Le montage optique utilisé comporte au moins trois miroirs ou trois faisceaux de fibres. Bien que cette solution assure une stabilité du centre de l'image dans le plan de détection, il introduit par contre une rotation de l'image fonction des rotations en site et en gisement de l'axe optique. Pour compenser cette rotation il faut équiper le dispositif de capteurs angulaires et de circuits de compensation.

Le but de la présente invention est de produire également un transport d'image à l'aide d'un montage optique articulé, permettant de maintenir l'image formée dans le plan de photodétection d'un capteur fixe en utilisant un montage optique simplifié et qui de plus n'introduira pas de rotation de l'image.

Suivant l'invention il est proposé de réaliser un dispositif à imagerie vidéo comportant un montage optique récepteur orientable spatialement par rapport à un détecteur d'image vidéo, par rotation de son axe optique autour d'un centre de rotation, et des moyens de

3

déport d'image pour préserver la formation de l'image sur le plan de photodétection au cours de la rotation, l'axe optique passant par le centre de rotation qui est situé sur un axe de référence lié à un montage mécanique supportant le détecteur, ce centre de rotation et les moyens de déport d'image étant disposés entre l'optique réceptrice et le détecteur, les moyens de déport d'image comportant une formule optique ayant une partie solidaire du détecteur et une autre partie solidaire du montage optique récepteur orientable, et caractérisé en ce que la formule optique équivaut à au moins un prisme réfracteur dont l'angle au sommet varie en fonction de la valeur angulaire du dépointage présenté entre l'axe optique et l'axe de référence, et que les matériaux, et que les matériaux utilisés pour constituer cette formule optique sont choisis en sorte que la déviation introduite par le prisme équivalent reste égale à la valeur instantanée de dépointage.

Suivant une autre particularité de l'invention, caractérisée en ce que la valeur d'angle au sommet du prisme équivalent reste aussi égale à la valeur instantanée de dépointage de l'axe optique, et que l'arête du prisme est constamment orthogonale au plan de dépointage formé par l'axe optique et celui de référence.

Les particularités et avantages de l'invention ressortiront de la description qui suit donnée à titre d'exemple à l'aide des figures annexées qui représentent :

- Fig.1a et 1b, des schémas simplifiés d'un dispositif à imagerie vidéo conforme à l'invention montrant le principe de fonctionnement utilisé en rayonnement parallèle ;

- Fig.1c, un schéma simplifié d'une première variante de réalisation du dispositif selon la Fig.1a ou 1b ;

- Fig.1d, un schéma simplifié d'une deuxième variante de réalisation du dispositif selon les Figs.1a et 1b ;

- Fig.2a, un schéma en perspective avec coupe de la solution Fig.1a pour montrer plus particulièrement les moyens de déport d'image et des rotations en site et en gisement ;

- Fig.2b, un schéma partiel en coupe du montage de déport d'image de la Fig.2a, pour mettre en évidence la rotation en gisement ;

- Fig.3, un exemple d'utilisation du dispositif selon la Fig.1a ou 1b, appliqué à un autodirecteur à imagerie infrarouge ;

-Fig.4, un exemple d'utilisation du dispositif selon la Fig.1c, appliqué à un autodirecteur à imagerie télévision ;

- Fig.5, une variante de réalisation du dispositif de déport d'image.

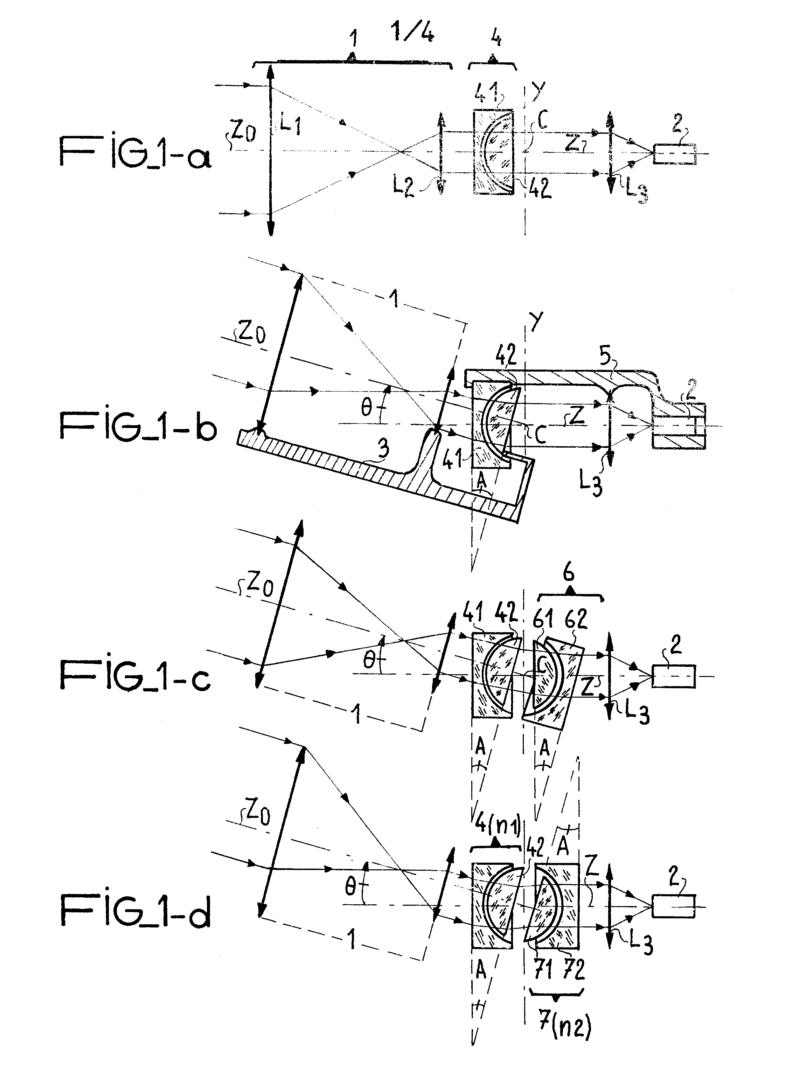

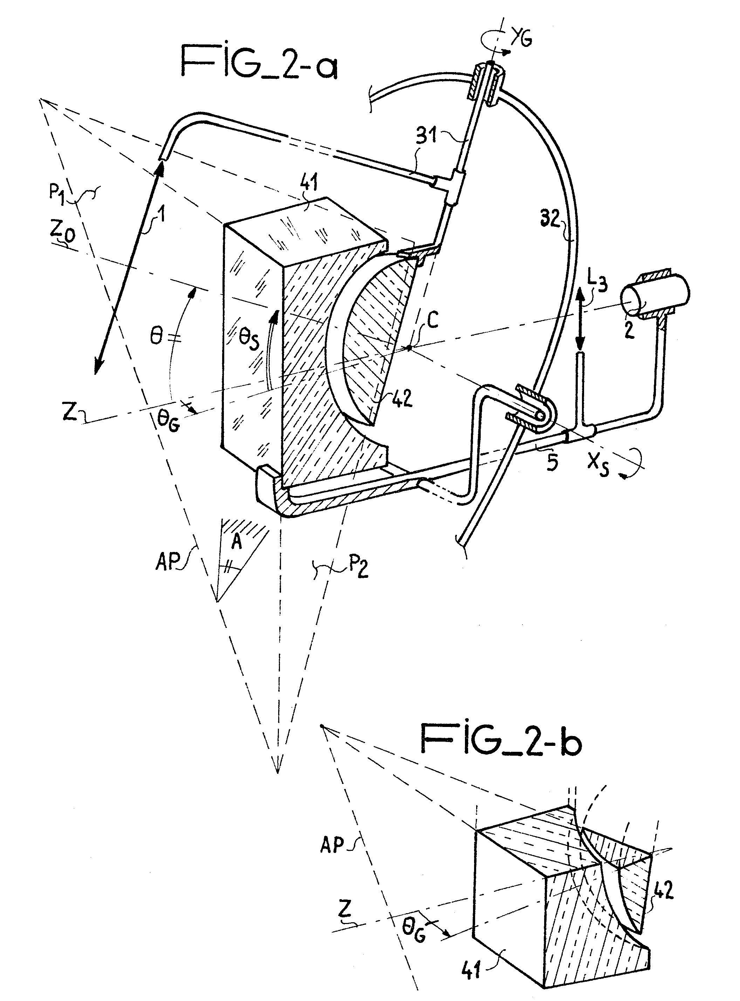

Le principe de base utilisé apparaît sur les Figs.1a et 1b. La Fig.1a représente la configuration de l'optique en position dite canonique, c'est-à-dire pour un dépointage nul de l'axe Zo de l'optique réceptrice 1 par rapport à un axe Z de référence lié au dispositif supportant le détecteur 2. Tous les éléments sont de révolution autour de la direction canonique Z. Pour un fonctionnement envisagé en rayons parallèles du déport d'image, l'optique de tête 1 est représentée par un montage afocal symbolisé par deux lentilles L1 et L2, étant entendu qu'il peut être réalisé d'une autre manière, par exemple avec des miroirs formant un système Cassegrain. Le dispositif détecteur d'image 2 est centré sur l'axe Z. La lentille L3 complémentaire, disposée en aval du déport d'image, sert à focaliser l'image sur le plan de photo-réception du détecteur 2. L'optique réceptrice 1 est supportée par un montage mécanique 3 agencé pour que l'axe optique Zo puisse tourner autour d'un centre de rotation C placé sur l'axe Z. Ceci peut être obtenu à l'aide d'un axe YG de rotation en gisement et d'un axe XS de rotation en site comme représenté sur la Fig.2a, ces axes étant perpendiculaires et passant par le point C. On a considéré sur les Figs.1b, 1c et 1d le plan passant par les axes Z et Zo c'est-à-dire celui du dépointage angulaire .

Les moyens de déport d'image 4 sont disposés, ainsi que le centre C, entre l'optique de tête 1 et le détecteur 2 pour préserver, au cours de la rotation, la formation de l'image sur le plan de photodétection. Les moyens de déport d'image 4 comportent une formule optique qui produit la réfraction du rayonnement parallèle et qui se compose d'une première partie 41 solidaire du détecteur 2 par un montage mécanique fixe de liaison 5 et d'une seconde partie 42 solidaire du montage tournant 3 et qui, dans la version figurée est disposé en aval de la première partie fixe 41.

L'optique de déport d'image 4 est équivalente à un prisme refracteur pour chaque dépointage $\theta$. La face arrière du prisme a tourné d'un angle égal à celui $\theta$ de l'axe de visée Zo. La face avant du prisme est fixe par rapport au détecteur 2. Ces faces sont constituées par des dioptres plans d'entrée et de sortie des parties 41 et 42 respectivement. Etant donné que les axes Zo et Z sont respectivement perpendiculaires à ces faces, l'arête AP du prisme qui est la droite d'intersection des plans P1 et P2 contenant ces faces (Fig.2a) reste automatiquement perpendiculaire au plan formé par les directions Zo et Z quel que soit la valeur $\theta$ de dépointage.

Pour assurer la rotation, les éléments 41 et 42 comportent chacun un dioptre sphérique centré sur le centre de rotation C. Les deux dioptres sphériques sont de rayons très voisin en sorte de n'être séparés que par une très mince couche d'air. Ainsi la qualité de la transmission optique est préservée et la rotation relative s'effectue sans aucune introduction de couples parasites qui pourraient réagir sur l'optique orientable 1, notamment dans une version gyrostabilisée. Le déport d'image est ainsi obtenu par un montage optique groupant une lentille plan-concave fixe 41 et une lentille plan-convexe mobile 42. L'angle au sommet A du prisme équivalent est variable, égalant à tout moment la valeur de dépointage $\theta$ correspondante.

Pour obtenir le fonctionnement désiré, la condition à respecter par le dispositif de déport d'image 4 est que la déviation D introduite par ce prisme équivaut à tout moment la valeur de rotation $\theta$ et donc égale l'angle A du prisme. Pour une valeur d'incidence $\theta$ égale à l'angle A, ce qui est le cas ici, la déviation D est donnée par la relation : $D = \text{Arc} \sin[\sin A (\sqrt{n^2 - \sin^2 A} - \cos A)]$,

ou de manière simplifiée selon la relation approchée bien connue D = (n-1) A. La condition précitée est par suite réalisée lorsque l'indice de réfraction n du matériau (en fait il s'agit de l'indice relatif à celui de l'air considéré égal à 1) est très proche de 2. A titre d'exemple on donne la déviation obtenue pour deux valeurs de n et de A :

| A | D | |
|---|---|---|
| | (n = 2) | (n = 1,98) |
| 10° | 10,077° | 9,874° |
| 20° | 20,64° | 20,22° |

Dans le cas ou il s'avèrerait difficile de trouver, pour la bande spectrale utilisée, un matériau ayant une valeur d'indice convenable, une autre configuration est envisageable, équivalente à deux prismes.

Une première variante en est donnée Fig.1c où les déviations D1 et D2 des prismes s'ajoutent , leur somme D1 + D2 devant rester égale au dépointage lorsque celui-ci varie. Il faut dans ce cas que la somme $n_1 + n_2$ des indices des 2 prismes soit sensiblement égale à 3. Si les prismes sont en un même matériau optique, ceci revient à avoir une déviation $\theta/2$ pour chacun d'eux ce qui correspond à un indice voisin de 1,5. On peut toutefois envisager de choisir des matériaux différents pour constituer chaque prisme. Le deuxième prisme est obtenu par un montage 6 analogue au montage 4 et disposé en aval du centre de rotation C de manière symétrique, et où l'élément plan-convexe 61 est l'élément fixe solidaire du détecteur et est suivi de l'élément plan-concave 62 qui est mobile avec l'optique réceptrice 1 et avec l'élément plan convexe 42.

Dans la seconde variante Fig.1d les déviations $D_1$ et $D_2$ des prismes sont de sens contraire et en sorte que la déviation résultante $D_1 - D_2$ reste également égale à $\theta$ . Ceci autorise le choix

7

d'un indice de réfraction supérieur à 2 pour le premier prisme et inférieur à cette valeur pour le second prisme qui donne une déviation de sens contraire au dépointage. Il faut dans ce cas que la différence $n_1 - n_2$ des indices des 2 prismes soit sensiblement égale à 1. Cette configuraton est intéressante car elle donne plus de souplesse pour le choix des matériaux et permet en particulier de corriger le chromatisme. Le second prisme est formé par un ensemble 7 d'éléments identiques aux éléments 41-42 du prisme 4, où également l'élément plan-convexe 71 est mobile avec l'optique réceptrice 1 et avec l'élément 42, et où l'élément plan-concave 72 est fixe, solidaire du détecteur 2.

La Fig.2a représente en vue perspective avec coupes un montage de base selon la Fig.1b pour symboliser une suspension mobile à deux degrès de liberté et montrer le dépointage $\theta$ résultant d'une déviation $\theta_S$ en site et d'une déviation $\theta_G$ en gisement ainsi que le prisme équivalent d'angle A = $\theta$ . Le schéma de détail Fig.2b montre plus clairement la rotation en gisement $\theta_G$ ; AP est l'arête du prisme formé par les plans P1 et P2 des faces planes d'entrée et de sortie.

L'optique réceptrice 1 et l'élément plan-convexe 41 du déport d'image sont solidaires par des montants 31 mécaniques d'un premier axe de rotation YG, en gisement. On a considéré une rotation $\theta_G$ autour de cet axe YG qui passe par le centre C de suspension ainsi que l'axe optique Zo. Les paliers de rotation en gisement font partie d'un cadre 32 qui peut lui-même tourner autour d'un deuxième axe XS perpendiculaire au précédent pour produire une rotation désirée en site, $\theta_S$ dans le cas figuré. L'axe mécanique XS passe également par le centre C, il est solidaire de la structure fixe 5 qui supporte le détecteur 2 et l'élément 41 du déport d'image, ainsi que la lentille L3.

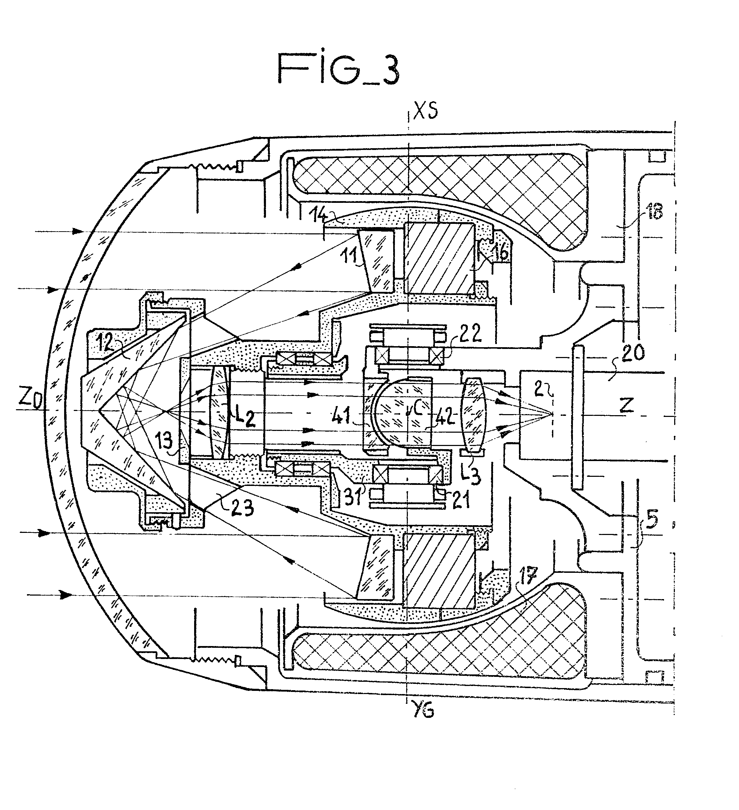

La Fig.3 représente une utilisation de ce montage de base appliqué à un autodirecteur à imagerie infrarouge. Dans ce concept de missile autodirecteur, le détecteur peut consister en une barrette de photodétecteurs et il est nécessaire de prévoir un dispositif opto-

8

mécanique de balayage d'image au niveau du réseau linéaire détecteur pour faire défiler l'image périodiquement devant la barrette. Dans la version représentée le balayage est de type circulaire, obtenu à l'aide d'un dièdre réflecteur 11 formant également miroir secondaire d'un montage Cassegrain d'entrée 11-12. L'élément 13 est un diaphragme délimitant le champ observé ; il est suivi par la lentille L2 pour constituer avec le montage Cassegrain un système afocal. L'élément 42 de déport d'image est plus large que dans les représentations précédentes, le centre C étant interne de manière à mieux répartir les masses car le montage optique 11-12-13-L2 et 42 est stabilisé par un gyroscope dont le point C constitue le centre de suspension. La barrette détectrice en infrarouge se trouve disposée à l'intérieur d'un dispositif de refroidissement 20, par exemple un cryostat. Le dispositif est figuré en position canonique, axes Z et Zo alignés ; l'axe Z correspond à l'axe longitudinal du missile. Les éléments optiques 11-12-13 et L2 sont entraînés en rotation par la toupie, ou rotor, 14. Les pièces de la partie tournante sont représentées à l'aide de pointillés au lieu de hachures et celle de la partie fixe ont été laissées en clair, en sorte de mieux distinguer ces parties et simplifier la représentation. La lentille L2 reproduit le faisceau sous forme de rayons parallèles, et la lentille L3 reconcentre ce faisceau après déviation sur le détecteur 2 disposé dans le plan focal. Les roulements 15 permettent de découpler mécaniquement l'optique terminale 41-42-L3 de la rotation de la toupie. Celle-ci comporte un aimant annulaire 16 qui subit les effets magnétiques des bobines de précession 17 montées fixes sur un support mécanique qui est solidaire du corps 5 du missile. De même le détecteur 2 et le dispositif de refroidissement 20 sont montés solidaires du corps 5. la demi partie supérieure au-dessus de la ligne Zo -Z représente une coupe longitudinale passant par l'axe gisement YG du montage cardan et la partie inférieure correspond à une coupe longitudinale à 90° de la précédente passant par l'axe site XS, ceci pour mieux visualiser la suspension à la cardan. Des paliers de roulement 21 et 22 autorisent les rotations respectives en gisement et en site. Le miroir 12 est supporté par l'intermédiaire de bras 23 de faible épaisseur qui le relie mécaniquement à la toupie. Le diaphragme 13 permet de limiter l'entrée de rayonnement parasite. En outre, la lentille L2, ou l'élément 41 ou L3, peut comporter un dépôt central correspondant à la zone non utilisée pour la réception par ce montage Cassegrain.

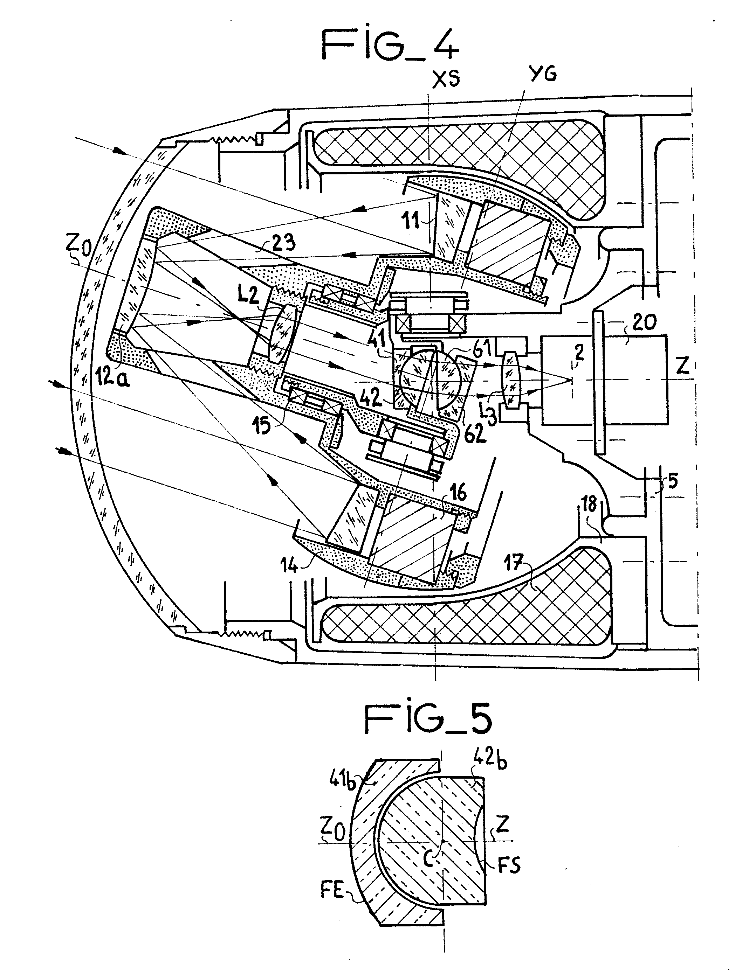

La Fig.4 montre une autre utilisation, cette fois sur un autodirecteur à imagerie télévision et en choisissant un autre montage de déport d'image, celui de la Fig.1c par exemple. Le détecteur 2 est constitué par une matrice de photodétecteurs en circuit à transfert de charge. Il n'est pas nécessaire ici de produire de balayage d'image et le secondaire du Cassegrain est un simple miroir convexe 12a centré sur l'axe Zo représenté en position inclinée. Dans cette version, l'indice des verres peut être le même pour chaque prisme, voisin de 1,5 ; on peut aussi envisager de l'utiliser en infrarouge dans la bande 3-5 micons avec, par exemple, un prisme 41-42 en fluorure de Calcium d'indice voisin de 1,3 et un prisme 61-62 en aluminate de Magnésium d'indice voisin de 1,7, l'association de ces deux prismes donnant une déviation globale sensiblement égale au dépointage de l'axe optique Zo.

On se rend compte que, outre les solutions exposées, il existe encore de multiples variantes conformes aux caractéristiques décrites et donc à considérer dans le cadre de la présente invention. Parmi ces variantes, on peut considérer comme représenté sur la figure 5 que les faces terminales du dispositif optique de déport d'image ne sont pas planes mais constituées par des dioptres courbes. Sur l'exemple figuré, la pièce 41b présente une face d'entrée convexe FE et la pièce 42b mobile une face de sortie concave FS. Ainsi le montage 41b-42b devient équivalent à un prisme précédé par une lentille plan-convexe et suivi par une lentille plan-concave ce qui permet de simplifier l'ensemble optique de réception et de focalisation.

Le dispositif à imagerie selon l'invention permet de préserver la direction Z de sortie du rayonnement incident de direction Zo ;

toutefois l'axe Zo n'est pas dévié selon l'axe Z passant par C mais selon une direction parallèle et d'autant peu écartée que le dépointage est plus faible. Etant donné que la plage de variation du dépointage reste faible pour les utilisation plus particulièrement envisagées, du genre autodirecteur, cet effet de parallaxe a été négligé sans inconvénient. Dans la formule type Fig.1d utilisant une formule optique équivalente à deux prismes de sens inverse, la parallaxe du premier prisme est compensé en partie par le deuxième prisme, en fonction des valeurs relatives de déviation.

# REVENDICATIONS

1. Dispositif à imagerie vidéo comportant un montage optique récepteur (1) orientable spatialement par rapport à un détecteur d'image vidéo (2), par rotation de son axe optique (Zo) autour d'un centre de rotation (C), et des moyens de déport d'image (4) pour préserver la formation de l'image sur le plan de photodétection au cours de la rotation, l'axe optique passant par le centre de rotation qui est situé sur un axe de référence (Z) lié à un montage mécanique (5) supportant le détecteur, ce centre de rotation et les moyens de déport d'image étant disposés entre l'optique réceptrice et le détecteur, lesdits moyens de déport d'image comportant une formule optique ayant une partie (41) solidaire du détecteur et une autre partie (42) solidaire du montage optique récepteur orientable, et caractérisé en ce que la formule optique (4) équivaut à au moins un prisme réfracteur dont l'angle au sommet (A) varie en fonction de la valeur angulaire du dépointage ($\theta$) présenté entre l'axe optique (Zo) et l'axe de référence (Z), et que les matériaux utilisés pour constituer cette formule optique sont choisis en sorte que la déviation (D) introduite par le prisme équivalent reste égale à la valeur instantanée de dépointage.

2. Dispositif selon la revendication 1, caractérisé en ce que la valeur d'angle au sommet (A) du prisme équivalent reste aussi égale à la valeur instantanée de dépointage ($\theta$) de l'axe optique, et que l'arête (AP) du prisme est constamment orthogonale au plan de dépointage formé par lesdits axes.

3. Dispositif selon la revendication 2, caractérisé en ce que la formule optique de déport d'image est constituée par au moins un agencement (4) correspondant audit prisme et composé de deux éléments optiques (41,42) possédant chacun un dioptre sphérique, ces dioptres sphériques étant disposés en vis à vis, centrés sur le centre de rotation et leurs rayons déterminés voisins pour être séparés par une mince couche d'air permettant la rotation sans introduction de couples mécaniques parasites, un premier élément optique (41)

0130869
12

constituant ladite partie solidaire du détecteur et le deuxième élément optique (42) constituant l'autre partie solidaire du montage optique.

4. Dispositif selon la revendication 3, caractérisé en ce que chaque agencement groupe un élément plan-concave (41, ,62,72) et un élément plan convexe (42, .,61,71), les faces planes étant respectivement perpendiculaires, l'une à l'axe optique et l'autre à l'axe de référence, et délimitant le prisme équivalent.

5. Dispositif selon la revendication 4, caractérisé en ce qu'il comporte un seul agencement avec le premier élément plan-concave (41,41a) et le deuxième élément plan-convexe (42,42a).

6.Dispositif selon la revendication 5, caractérisé en ce qu'il comporte deux agencements identiques (4,7) situés symétriquement de part et d'autre du centre de rotation (C), l'ensemble formant deux prismes de sens contraire et étant déterminé pour que la déviation résultante $(D_1-D_2)$ égale la valeur intantanée de dépointage ($\theta$).

7. Dispositif selon la revendication 4, caractérisé en ce qu'il comporte deux agencements (4,6) situés symétriquement de part et d'autre du centre de rotation (C), un premier agencement avec le premier élément plan-concave (41) et le second plan-convexe (42) et un deuxième agencement où, inversement, le premier élément est plan-convexe (61) et le second plan-concave (62), l'ensemble formant deux prismes de même sens et étant déterminé pour que la déviation résultante $(D_1+D_2)$ égale la valeur instantanée de dépointage ($\theta$).

8. Dispositif selon l'une quelconque des revendications 4, 5, 6 ou 7, caractérisé en ce que les faces planes des éléments (41b,42b) de la formule optique de déport d'image sont remplacées par les faces courbes (FE,FS) en sorte de constituer l'équivalent d'un prisme précédé par une lentille et suivi par une autre lentille.

9. Dispositif selon l'une quelconque des revendications 4, 5, 6, 7 ou 8, caractérisé en ce que la formule optique de déport d'image travaille en rayonnement parallèle avec une optique réceptrice afocale associée (1).

10. Dispositif selon l'une quelconque des revendications précédentes, caractérisé en ce que le montage optique récepteur comporte un montage cardan permettant la rotation en site et en gisement autour de deux axes mécaniques perpendiculaires (XS et YG) et passant par le centre du cardan correspondant au centre de rotation, les moyens de déport d'image permettant d'amener directement par réfraction la direction de l'axe optique selon une direction de sortie correspondant à celle de référence et maintenir l'image substantiellement centrée au niveau du plan de détection.

11. Dispositif selon la revendication 10, caractérisé en ce que le montage cardan fait partie d'une suspension gyroscopée destinée à stabiliser en direction l'axe optique.

12. Dispositif selon la revendication 11 utilisé pour constituer un autodirecteur à imagerie infrarouge ou télévision.

13. Dispositif selon la revendication 12, caractérisé en ce que l'optique réceptrice comporte un montage Cassegrain de miroirs (11,12,12a) suivi d'une lentille convergente (L2) pour constituer un ensemble afocal qui est couplé mécaniquement avec la toupie (14) du gyroscope.

0130869

FIG_1-a

FIG_1-b

FIG_1-c

FIG_1-d

# FIG_2-a

# FIG_2-b

FIG_3

FIG_4

FIG_5

0130869

| | Office européen<br>des brevets | **RAPPORT DE RECHERCHE EUROPEENNE** | Numéro de la demande |
| | | | EP  84 40 1167 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | GB-A-2 093 213  (BRITISH AEROSPACE)<br>* Page 2, ligne 9 - page 3, ligne 23; figure * | 1,10 | F 41 G    7/22<br>G 02 B   27/64 |
| A | | 2-5 | |
| | --- | | |
| Y | EP-A-0 050 539  (THOMSON-CSF)<br>* Page 3, ligne 7 - page 4, ligne 15; page 5, ligne 26 - page 6, ligne 16; figures 1,5 * | 1,10 | |
| A | | 11-13 | |
| | --- | | |
| A | EP-A-0 004 227  (THOMSON-CSF)<br>* Page 13, ligne 12 - page 17, ligne 28; figures 7-10 * | 1 | *DOMAINES TECHNIQUES RECHERCHES (Int. Cl. 3)* |
| | --- | | |
| A | US-A-3 942 862  (H. FURUKAWA et al.)<br>* Colonne 3, ligne 4 - colonne 6, ligne 5; figures 1-8 * | 1-5,9 | F 41 G<br>G 01 S<br>G 02 B |
| | --- | | |
| A | GB-A-1 168 261  (BELL & HOWELL)<br>* Page 4, ligne 113 - page 5, ligne 50; figures 4-6 * | 8,9 | |
| | --- | | |
| A | CH-A- 521 656  (CONTRAVES)<br>* En entier * | 7 | |
| | ---         -/- | | |

Le présent rapport de recherche a été établi pour toutes les revendications

| Lieu de la recherche | Date d'achèvement de la recherche | Examinateur |
|---|---|---|
| LA HAYE | 16-08-1984 | VAN WEEL E.J.G. |

0130869

Office européen
des brevets

**RAPPORT DE RECHERCHE EUROPEENNE**

Numéro de la demande

EP 84 40 1167

| DOCUMENTS CONSIDERES COMME PERTINENTS | | | Page 2 | |
|---|---|---|---|---|
| Catégorie | Citation du document avec indication, en cas de besoin, des parties pertinentes | Revendication concernée | CLASSEMENT DE LA DEMANDE (Int. Cl. ³) | |
| A | FR-A-2 199 605 (NIPPON KOGAKU) * Page 5, ligne 26 - page 6, ligne 4; figure 11 * ----- | 6 | | |
| | | | DOMAINES TECHNIQUES RECHERCHES (Int. Cl. ³) | |
| | Le présent rapport de recherche a été établi pour toutes les revendications | | | |

| Lieu de la recherche | Date d'achèvement de la recherche | Examinateur |
|---|---|---|
| LA HAYE | 16-08-1984 | VAN WEEL E.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82